# EUROPÄISCHE PATENTSCHRIFT

(11) **EP 2 058 067 B1**
(45) Veröffentlichungstag und Bekanntmachung des Hinweises auf die Patenterteilung: **02.07.2014**
(21) Anmeldenummer: 08019229.7
(22) Anmeldetag: 04.11.2008
(51) Int. Cl.: B23B 5/16

(54) **Vorrichtung mit einem Antrieb und einem Entgratwerkzeug sowie Entgratwerkzeug**
Device with a drive and a deburring tool as well as deburring tool
Dispositif doté d'un entraînement et d'un outil d'ébavurage et outil d'ébavurage

(30) Priorität: 06.11.2007 DE 102007054523
(43) Veröffentlichungstag der Anmeldung: 13.05.2009
(73) Patentinhaber: REMS GmbH & Co KG, 71332 Waiblingen (DE)
(72) Erfinder: Wagner, Rudolf, 70376 Stuttgart (DE)
(74) Vertreter: Jackisch-Kohl, Anna-Katharina

(56) Entgegenhaltungen:
- EP-A- 0 652 064
- DE-U1- 29 608 602
- GB-A- 2 380 697
- GB-A- 2 384 453

## Beschreibung

Die Erfindung betrifft eine Vorrichtung mit einem Antrieb und einem Entgratwerkzeug nach dem Oberbegriff des Anspruches 1 sowie ein Entgratwerkzeug nach dem Oberbegriff des Anspruches 9.

Entgratwerkzeuge (DE 296 086 02 U1) dienen zum Innen- und/oder Außenentgraten von Rohren. Diese Entgratwerkzeuge weisen einen Innen- und einen Außenentgrater auf, so dass mit ihnen die Rohre sowohl innen als auch außen entgratet werden können. Damit das Entgratwerkzeug an einen Antrieb angeschlossen werden kann, ist eine Adapterglocke vorgesehen, die in das Antriebsgerät eingesetzt wird. Die Adapterglocke hat einen Bajonettverschluss, mit dem das in die Adapterglocke eingesetzte Entgratwerkzeug mittels Mitnehmer arretiert wird. Der Anschluss des Entgratwerkzeuges an die Adapterglocke ist umständlich.

Der Erfindung liegt die Aufgabe zugrunde, die gattungsgemäße Vorrichtung und das gattungsgemäße Entgratwerkzeug so auszubilden, dass bei kostengünstiger Herstellung eine problemlose Handhabung möglich ist.

Diese Aufgabe wird bei der gattungsgemäßen Vorrichtung erfindungsgemäß mit den kennzeichnenden Merkmalen des Anspruches 1 und beim gattungsgemäßen Entgratwerkzeug erfindungsgemäß mit den kennzeichnenden Merkmalen des Anspruches 9 gelöst.

Bei der erfindungsgemäßen Vorrichtung ist der Mitnehmer schaftförmig ausgebildet, dessen Achse in der Achse des Innen- und/oder Außenentgraters liegt. Mit dem schaftförmigen Mitnehmer kann das Entgratwerkzeug problemlos in ein Spannfutter einer Bohrmaschine oder in eine Steckaufnahme eines Antriebsaggregates eingesetzt werden. Die Handhabung der erfindungsgemäßen Vorrichtung ist einfach.

Vorteilhaft ist der Mitnehmer fest mit dem Entgratwerkzeug verbunden. Dann ist ein zusätzliches, vom Bediener gesondert zu montierendes Adapterteil nicht erforderlich. Der Bediener muss nur das Entgratwerkzeug mittels des fest mit ihm verbundenen Mitnehmers an den Antrieb anschließen.

Vorteilhaft hat zumindest der Endbereich des Mitnehmers eckigen Querschnitt. Mit dem Endbereich wird der Mitnehmer mit dem Antrieb bzw. dem Antriebsaggregat verbunden. Der eckige oder auch unrunde Querschnitt ermöglicht eine einwandfreie Drehmitnahme des Entgratwerkzeuges.

Wird zum Antrieb des Entgratwerkzeuges eine Bohrmaschine als Antrieb verwendet, dann kann zumindest der Endbereich des Mitnehmers auch runden Querschnitt haben.

Der Kegel und die Entgraterstege des Innenentgraters bestehen aus hartem Material, vorzugsweise aus Stahl.

Auch der Kegel des Außenentgraters und die Entgraterstege bestehen aus zum Außenentgraten notwendigem harten Material, vorzugsweise aus Stahl.

Eine besonders einfache Handhabung und problemlose Ausbildung ergibt sich, wenn der Innenentgrater und der Außenentgrater einen gemeinsamen Kegel haben. In diesem Falle kann mit den außenseitigen Entgraterstegen das Rohr innen- und mit den innenseitigen Entgraterstegen außenseitig entgratet werden.

Der Mitnehmer steht über das im Durchmesser kleinere Ende des Kegels vorteilhaft axial vor. Dieses überstehende Ende des Mitnehmers wird dann zum motorischen Antrieb verwendet, wenn mit dem Entgratwerkzeug ein Außenentgratvorgang durchgeführt werden soll.

Der Mitnehmer ragt vorteilhaft in den Kegel, so dass das innerhalb des Kegels liegende Ende des Mitnehmers dann zum Drehantrieb eingesetzt werden kann, wenn mit dem Entgratwerkzeug ein Innenentgratvorgang ausgeführt werden soll.

Auf diese Weise kann das Entgratwerkzeug wahlweise zum Innen- und zum Außenentgraten eingesetzt werden. Es ist hierbei nur notwendig, das Entgratwerkzeug jeweils um 180° zu drehen, um das entsprechende Ende des Mitnehmers mit dem Antriebsaggregat verbinden zu können.

Der Innen- und/oder Außenentgrater ist vorteilhaft von einer Handhabe umgeben. Dadurch ist es möglich, das Entgratwerkzeug auch manuell mittels der Handhabe zum Entgraten einzusetzen. Somit kann das Entgratwerkzeug entweder von Hand betätigt oder mittels des Mitnehmers in eine Antriebsmaschine eingesetzt und motorisch betätigt werden.

Um bei einer manuellen Vorgehensweise eine zuverlässige und eine einfache Handhabung zu ermöglichen, ist die Handhabe vorteilhaft hülsenförmig ausgebildet. Dadurch lässt sich das Entgratwerkzeug einfach drehen, was für den Entgratvorgang erforderlich ist.

Vorteilhaft ist der Kegel mit seinem im Durchmesser größeren Ende an der Innenwand der Handhabe befestigt. Dadurch werden der Innenentgrater bzw. seine Entgraterstege von der Handhabe mit Abstand umgeben und dadurch vor Beschädigung geschützt.

Das erfindungsgemäße Entgratwerkzeug zeichnet sich dadurch aus, dass das Formschlusselement ein Schaft ist, dessen Achse in der Achse des Innen- und/oder Außenentgraters liegt und sich in das Entgratwerkzeug erstreckt.

Die in Bezug auf die erfindungsgemäße Vorrichtung angegebenen Merkmale des Entgratwerkzeuges gelten auch für das Entgratwerkzeug nach Anspruch 9.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläuert. Es zeigen
- Fig. 1: in perspektivischer Darstellung ein erfindungsgemäßes Entgratwerkzeug,
- Fig. 2: eine Stirnansicht des erfindungsgemäßen Entgratwerkzeuges gemäß Fig. 1,
- Fig. 3: einen Schnitt längs der Linie A - A in Fig. 2.

Mit dem Entgratwerkzeug können Rohre innen und außen entgratet werden. Das Entgratwerkzeug hat eine Hülse 1, die außenseitig mit mehreren Riffelungen 2 versehen ist, die sich über den Umfang der Hülse 1 erstrecken.

Beispielhaft sind jeweils zwei Riffelungen 2 vorgesehen, die geringen Abstand voneinander haben. Die Hülse 1 dient als Handhabe, wenn das Entgratwerkzeug zum Entgraten des (nicht dargestellten) Rohres von Hand betätigt wird. Die Riffelungen 2 erlauben dann eine sichere Handhabung beim Entgratvorgang.

Die Hülse 1 hat kreisförmigen Querschnitt und umgibt einen Innenentgrater 3 und einen Außenentgrater 4. Zur Bildung dieser beiden unterschiedlichen Entgrater ist in der Hülse 1 ein Kegel 5 vorgesehen, der sich von einem Ende der Hülse 1 aus in Richtung auf das andere Hülsenende erstreckt. Der Kegel 5 ist an seinem breiteren Ende mit einem zylindrischen Ring 6 versehen, mit dem er an der Innenseite 7 der Hülse 1 an oder nahe ihres einen Endes befestigt ist. Die Außenseite 8 des Kegelmantels 9 ist mit Entgraterstegen 10 versehen, die sich vom schmalen Ende des Kegels 5 aus bis zum Ring 6 erstrecken. Die Höhe der Entgraterstege 10 nimmt in Richtung auf den Ring 6 des Kegels 5 stetig zu. Die Entgraterstege 10 sind mit geringem Abstand nebeneinander angeordnet und erstrecken sich längs der gedachten Kegelmantellinien. Mit den Entgraterstegen 10 wird die Innenseite des Rohres entgratet.

Die Innenseite 11 des Kegelmantels 9 ist mit entsprechenden Entgraterstegen 12 versehen, die sich vom schmalen Ende des Kegels 5 aus bis zum gegenüberliegenden Ende des Kegels 5 erstrecken. Die Entgraterstege 12 liegen in geringen Abständen nebeneinander und erstrecken sich ebenfalls längs der gedachten Kegelmantellinien. Die Höhe der Entgraterstege 12 nimmt vom kleinen Durchmesser des Kegels 5 aus ständig zu. Die Entgraterstege 12 bilden den Außenentgrater 4. Die Entgraterstege 10, 12 sind so ausgebildet, dass sie das Rohr innen beziehungsweise außen einwandfrei entgraten. Solche Entgraterstege sind bekannt und werden darum auch nicht näher beschrieben. Sie bestehen aus hartem Material, vorzugsweise aus Stahl.

Das Entgratwerkzeug kann nicht nur mit der Hülse 11 von Hand zum Entgraten des Rohres eingesetzt werden, sondern auch an einen Antrieb angeschlossen werden. Hierzu ist das Entgratwerkzeug mit einem Formschlusselement in Form eines Mitnehmers 13 versehen, der sich durch den Kegel 5 erstreckt. Der Mitnehmer 13 ist als Schaft beziehungsweise Stange ausgebildet. Der Mitnehmer 13 erstreckt sich zentrisch durch den Außenentgrater 4 und steht geringfügig über den Innenentgrater 3 vor. Die Achse des Mitnehmers 13 liegt in der Achse des Innen- und des Außenentgraters 3, 4. Der Mitnehmer 13 kann wahlweise in ein Spannfutter einer Bohrmaschine oder in eine Steckaufnahme einer entsprechenden Antriebsmaschine eingesetzt werden. Wird der Mitnehmer 13 in das Spannfutter einer Bohrmaschine eingespannt, kann der Mitnehmer 13 runden Querschnitt haben. Wird der Mitnehmer 13 in eine Steckaufnahme eingesetzt, dann weist zumindest das zum Eingriff in die Steckaufnahme gesehene Ende des Mitnehmers 13 unrunden, vorzugsweise eckigen Querschnitt auf.

Mit Hilfe des Mitnehmers 13 lässt sich der Entgrater problemlos an eine Antriebsmaschine anschließen, so dass der Entgrater auch maschinell drehbar angetrieben werden kann.

Der Mitnehmer 13 kann in jeder geeigneten Weise mit dem Entgratwerkzeug verbunden werden, beispielsweise durch Einpressen, durch Schweißen, durch Löten und dergleichen. Es ist auch möglich, den Mitnehmer 13 einstückig mit dem Kegel 5 auszubilden. Im dargestellten Ausführungsbeispiel steht der Mitnehmer 13 axial über den Innenentgrater 3 und die Hülse 1 vor, während das andere Ende des Mitnehmers 13 bündig mit der Stirnseite der Hülse 1 sowie des Außenentgraters 4 liegt. Abweichend von diesem Ausführungsbeispiel können die beiden Enden des Mitnehmers 13 innerhalb der Hülse 1 liegen, also nicht axial über sie vorstehen beziehungsweise sogar Abstand von den die Stirnseiten der Hülse 1 enthaltenen Ebenen haben. Ebenso können auch die beiden Enden des Mitnehmers 13 über die Hülse 1 vorstehen.

Die Hülse 1 besteht vorteilhaft aus Leichtmetall, insbesondere aus Aluminium.

Im dargestellten bevorzugten Ausführungsbeispiel haben der Innenentgrater 3 und der Außenentgrater 4 den gemeinsamen Kegel 5. Selbstverständlich können die beiden Entgrater 3, 4 auch unabhängig voneinander gestaltet sein, insbesondere auch unterschiedliche Kegelwinkel haben.

Sollte die Antriebsmaschine für den Anschluss des Entgratwerkzeuges eine Gewindeaufnahme haben, können die beiden Enden des Mitnehmers 13 mit einem entsprechenden Außengewinde versehen sein.

Das Entgratwerkzeug ermöglicht eine problemlose und dennoch zuverlässige Verbindung mit einem Antriebsaggregat. Da Rohre in der Regel sowohl innen- als auch außen entgratet werden, ist es in der Praxis üblich, dass das Entgratwerkzeug mehrfach an die Antriebsmaschine angeschlossen beziehungsweise von ihr abgenommen und um 180° gedreht wieder angeschlossen wird. Mit dem Mitnehmer 13 wird dieser Wechsel wesentlich vereinfacht. Der Mitnehmer 13 ist darüber hinaus ein kostengünstiges Bauteil, so dass das Entgratwerkzeug preisgünstig hergestellt werden kann.

Das Entgratwerkzeug kann auch nur den Innenentgrater 3 oder nur den Außenengrater 4 aufweisen. In diesem Falle sind nur die äußeren oder die inneren Entgraterstege 10 bzw. 12 vorgesehen.

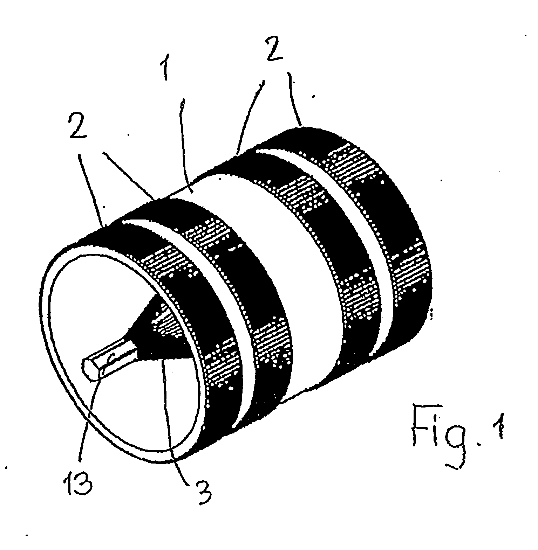

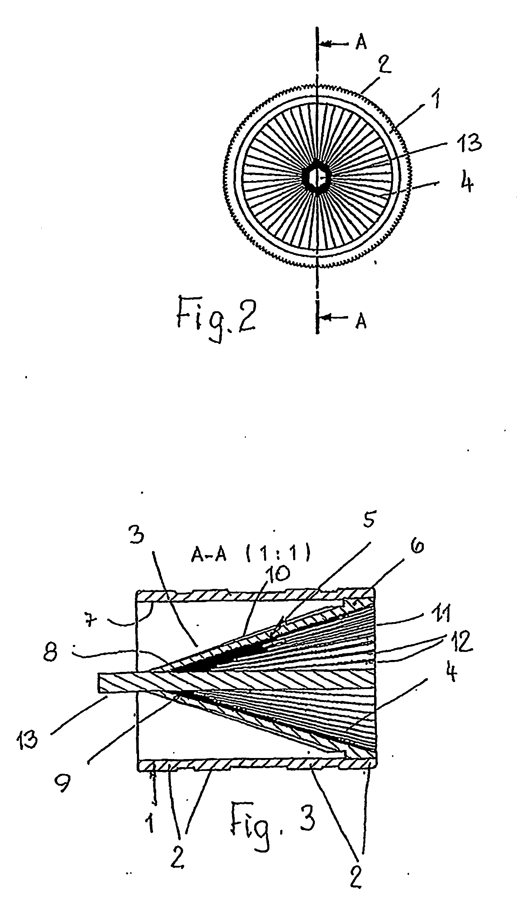

Als Formschlusselement kann das Entgratwerkzeug auch mit einer Formschlussöffnung versehen sein, die in der Spitze des Kegels 5 vorgesehen ist. Das Entgratwerkzeug weist in diesem Falle keinen fest mit ihm verbundenen Mitnehmer auf. Stattdessen wird ein derartiger Mitnehmer mit der Bohrmaschine oder der Steckaufnahme einer entsprechenden Antriebsmaschine verbunden und anschließend das Entgratwerkzeug so auf den Mitnehmer aufgesetzt, dass er mit seinem freien Ende in die Formschlussöffnung an der Spitze des Kegels 5 eingreift. Die Öffnung weist in diesem Falle unrunden oder vorteilhaft eckigen Umriss auf. Im Übrigen kann das Entgratwerkzeug gleich ausgebildet sein wie das Ausführungsbeispiel gemäß den Fig. 1 bis 3.

## Patentansprüche

1. Vorrichtung mit einem Antrieb und einem Entgratwerkzeug, das einen Innen- und/oder einen Außenentgrater (3, 4) aufweist, wobei der Innenentgrater (3) bzw. der Außenentgrater (4) einen Kegel (5) aufweist, der außenseitig bzw. innenseitig mit Entgraterstegen (10, 12) versehen ist, und das mit dem Antrieb über wenigstens einen Mitnehmer (13) antreibbar ist, dessen Achse in der Achse des Innen- und/oder Außenentgraters (3, 4) liegt und der drehfest mit dem Entgratwerkzeug verbunden ist,
**dadurch gekennzeichnet, dass** der Mitnehmer (13) schaftförmig ausgebildet ist und sich in das Entgratwerkzeug erstreckt

2. Vorrichtung nach Anspruch 1, **dadurch gekennzeichnet, dass** der Mitnehmer (13) fest mit dem Entgratwerkzeug verbunden ist.

3. Vorrichtung nach Anspruch 1 oder 2,
**dadurch gekennzeichnet, dass** zumindest der Endbereich des Mitnehmers (13) eckigen Querschnitt hat.

4. Vorrichtung nach Anspruch 1 oder 2,
**dadurch gekennzeichnet, dass** zumindest der Endbereich des Mitnehmers (13) runden Querschnitt hat.

5. Vorrichtung nach einem der Ansprüche 1 bis 4,
**dadurch gekennzeichnet, dass** der Innenentgrater (3) und der Außenentgrater (4) einen gemeinsamen Kegel (5) haben.

6. Vorrichtung nach einem der Ansprüche 1 bis 5,
**dadurch gekennzeichnet, dass** der Mitnehmer (13) über das im Durchmesser kleinere Ende des Kegels (5) axial vorsteht.

7. Vorrichtung nach einem der Ansprüche 1 bis 6,
**dadurch gekennzeichnet, dass** der Innen- und/oder Außenentgrater (3, 4) von einer Handhabe (1) umgeben ist, die vorzugsweise hülsenförmig ausgebildet ist.

8. Vorrichtung nach Anspruch 7,
**dadurch gekennzeichnet, dass** der Kegel (5) mit seinem im Durchmesser größeren Ende an der Innenwand (7) der Handhabe (1) befestigt ist.

9. Entgratwerkzeug für eine Vorrichtung nach einem der Ansprüche 1 bis 8, mit einem Innen- und/oder Außenentgrater (3, 4), wobei der Innenentgrater (3) bzw. der Außenentgrater (4) einen Kegel (5) aufweisen, der außenseitig bzw. innenseitig mit Entgraterstegen (10, 12) versehen ist, und mit wenigstens einem Formschlusselement (13), das eine in der Achse des Entgratwerkzeuges liegende Achse aufweist und das drehfest mit dem Entgratwerkzeug verbunden ist,
**dadurch gekennzeichnet, dass** das Formschlusselement (13) ein Schaft ist, dessen Achse in der Achse des Innen- und/oder Außenentgraters (3, 4) liegt und der sich in das Entgratwerkzeug erstreckt.

10. Entgratwerkzeug nach Anspruch 9,
**dadurch gekennzeichnet, dass** zumindest der Endbereich des Schaftes (13) eckigen oder runden Querschnitt hat.

11. Entgratwerkzeug nach Anspruch 9 oder 10,
**dadurch gekennzeichnet, dass** der Innenentgrater (3) und der Außenentgrater (4) einen gemeinsamen Kegel (5) haben.

12. Entgratwerkzeug nach einem der Ansprüche 9 bis 11,
**dadurch gekennzeichnet, dass** der Schaft (13) über das im Durchmesser kleinere Ende des Kegels (5) axial vorsteht.

13. Entgratwerkzeug nach einem der Ansprüche 9 bis 12,
**dadurch gekennzeichnet, dass** der Innen- und/oder Außenentgrater (3, 4) von einer Handhabe (1) umgeben sind, die vorzugsweise hülsenförmig ausgebildet ist.

14. Entgratwerkzeug nach Anspruch 13,
**dadurch gekennzeichnet, dass** der Kegel (5) mit seinem im Durchmesser größeren Ende an der Innenwand (7) der Handhabe (1) befestigt ist.

## Claims

1. Device with a drive and a deburring tool, comprising an interior and/or an exterior deburrer (3, 4), whereas the interior deburrer (3) respectively the exterior deburrer (4) comprise a cone (5), provided at its outer side respectively its inner side with deburring webs (10, 12), and which is drivable by the drive via at least one tappet (13), the axis of which is positioned in the axis of the interior and/or exterior deburrer (3, 4) and which is connected to the deburring tool by a torqueproof connection, **characterised in that** the tappet (13) has a shank-shaped configuration and extends into the deburring tool.

2. Device according to claim 1,
**characterised in that** the tappet (13) is firmly connected to the deburring tool.

3. Device according to claim 1 or 2,to
**characterised in that** at least the end section of the tappet (13) has an angular cross-section.

4. Device according to claim 1 or 2,
**characterised in that** at least the end section of the tappet (13) has a round cross-section.

5. Device according to one of the claims 1 to 4,
**characterised in that** the interior and the exterior deburrer (3, 4) have a common cone (5).

6. Device according to one of the claims 1 to 5,
**characterised in that** the tappet (13) projects axially beyond that end of the cone (5), which is smaller in diameter.

7. Device according to one of the claims 1 to 6,
**characterised in that** the interior and/or exterior deburrer (3, 4) is/are surrounded by a handle (1), which is preferably in a sleeve-shaped configuration.

8. Device according to claim 7,
**characterised in that** the cone (5) is fixed to the inner wall (7) of the handle (1) by its end which is larger in diameter .

9. Deburring tool for a device according to one of the claims 1 to 8, with an interior and/or exterior deburrer (3, 4) comprising a cone (5), provided at its outer side respectively its inner side with deburring webs (10, 12) and with at least one form-fitting element (13), comprising an axis, positioned in the axis of the deburring tool and which is torque proof connected with the deburring tool,
**characterised in that** the form-fitting element (13) is a shaft, the axis of which is situated in the axis of the interior and/or exterior deburrer (3, 4) and which extends into the deburring tool.

10. Deburring tool according to claim 9,
**characterised in that** at least the end section of the shaft (13) has an angular or round cross-section.

11. Deburring tool according to claim 9 or 10,
**characterised in that** the interior deburrer (3) and the exterior deburrer (4) have a common cone (5).

12. Deburring tool according to one of the claims 9 to 11,
**characterised in that** the shaft (13) projects axially beyond that end of the cone (5), which is smaller in diameter.

13. Deburring tool according to one of the claims 9 to 12,
**characterised in that** the interior and/or the exterior deburrer (3, 4) are surrounded by a handle (1), which is preferably in a sleeve-shaped configuration.

14. Deburring tool according to claim 13,
**characterised in that** the cone (5) is fixed at the inner wall (7) of the handle (1) by its end, which is larger in diameter.

## Revendications

1. Dispositif doté d'un entraînement et d'un outil d'ébavurage comprenant un ébavureur intérieur et/ou un ébavureur extérieur (3, 4), l'outil ébavureur intérieur (3) respectivement l'outil ébavureur extérieur (4) comprenant un cône (5),disposé sur le côté extérieur respectivement sur le côté intérieur avec des traverses d'ébavurage (10, 12) et lequel peut être actionné par l'entraînement par l'intermédiaire d'au moins un toc (13),dont l'axe est situé dans l'axe de l'ébavureur intérieur (3) et/ou de l'ébavureur extérieur (4), et qui est relié de façon solidaire en rotation avec l'outil d'ébavurage,
**caractérisé en ce que** le toc (13) est configuré en forme de manche et se projette dans l'outil d'ébavurage.

2. Dispositif selon revendication 1,
**caractérisé en ce que** le toc (13) est connecté fixement avec l'outil d'ébavurage.

3. Dispositif selon revendication 1 ou 2,
**caractérisé en ce qu'**au moins la zone d'extrémité du toc (13) a une coupe angulaire.

4. Dispositif selon revendication 1 ou 2,
**caractérisé en ce qu'**au moins la zone d'extrémité du toc (13) a une coupe ronde.

5. Dispositif selon une des revendications 1 à 4,
**caractérisé en ce que** l'ébavureur intérieur (3) et l'ébavureur extérieur (4) ont un cône (5) commun.

6. Dispositif selon une des revendications 1 à 5,
**caractérisé en ce que** le toc (13) fait saillie axialement sur l'extrémité du cône (5) la plus petite en diamètre.

7. Dispositif selon une des revendications 1 à 6,
**caractérisé en ce que** l'ébavureur intérieur et/ou extérieur (3, 4) sont entourés d'une manette (1), qui est configurée de préférence en forme de douille.

8. Dispositif selon revendication 7,
**caractérisé en ce que** le cône (5) est fixé sur la paroi interne (7) de la manette (1) par son extrémité la plus grande en diamètre.

9. Outil d'ébavurage pour un dispositif selon une des revendications 1 à 8, avec un ébavureur intérieur et/ou un ébavureur extérieur (3, 4), l'ébavureur intérieur (3) respectivement l'outil ébavureur extérieur (4) comprend un cône (5), pourvu sur le côté externe respectivement sur le côté interne de traverses d'ébavurage (10, 12) et avec au moins un élément de fermeture géométrique (13), comprenant un axe situé dans l'axe de l'outil d'ébavurage et qui est connecté solidaire en rotation avec l'outil d'ébavurage,
**caractérisé en ce que** l'élément de fermeture géométrique (13) est un manche, dont l'axe est situé dans l'axe de l'ébavureur intérieur et/ou extérieur (3, 4) et s'étend dans l'outil d'ébavurage.

10. Outil d'ébavurage selon revendication 9,
**caractérisé en ce qu'**au moins la zone d'extrémité du manche (13) comprend une coupe angulaire ou ronde.

11. Outil d'ébavurage selon revendication 9 ou 10,
**caractérisé en ce que** l'ébavureur intérieur (3) et/ou extérieur (4) ont un cône (5) commun.

12. Outil d'ébavurage selon une des revendications 9 à 11,
**caractérisé en ce que** le manche (13) se projette axialement sur l'extrémité du cône (5) la plus petite en diamètre.

13. Outil d'ébavurage selon une des revendications 9 à 12,
**caractérisé en ce que** l'ébavureur intérieur et/ou extérieur (3, 4) est entouré par une manette (1), qui est configurée de préférence en forme de douille.

14. Outil d'ébavurage selon revendication 13,
**caractérisé en ce que** le cône (5) est fixé sur la paroi interne (7) de la manette (1) par son extrémité la plus grande en diamètre.
